# EUROPÄISCHE PATENTSCHRIFT

(11) **EP 3 558 630 B1**
(45) Veröffentlichungstag und Bekanntmachung des Hinweises auf die Patenterteilung: **01.07.2020**
(21) Anmeldenummer: 18807624.4
(22) Anmeldetag: 22.11.2018
(51) Int. Cl.: B29C 49/46, B29C 49/64, B29C 49/68, B29C 49/06, B29C 49/12, B29C 49/36, B29C 49/08, B29C 49/78, B29L 31/00

(54) **VERFAHREN UND VORRICHTUNG FÜR DIE HERSTELLUNG VON GEFÜLLTEN BEHÄLTERN AUS TEMPERATURKONDITIONIERTEN VORFORMLINGEN**
METHOD AND DEVICE FOR THE PRODUCTION OF FILLED CONTAINERS FROM THERMALLY CONDITIONED PREFORMS
PROCÉDÉ ET DISPOSITIF POUR LA FABRICATION DE RÉCIPIENTS REMPLIS À PARTIR DE PRÉFORMES THERMIQUEMENT CONDITIONNÉES

(30) Priorität: 30.11.2017 DE 102017011087
(43) Veröffentlichungstag der Anmeldung: 30.10.2019
(73) Patentinhaber: KHS Corpoplast GmbH, 22145 Hamburg (DE)
(72) Erfinder: JAISER, Benjamin, 20144 Hamburg (DE); LINKE, Michael, 22159 Hamburg (DE); ULUTÜRK, Deniz, 22761 Hamburg (DE)
(74) Vertreter: Meissner Bolte Partnerschaft mbB
(86) Internationale Anmeldenummer: PCT/EP2018/082169
(87) Internationale Veröffentlichungsnummer: WO 2019/105833

(56) Entgegenhaltungen:
- DE-A1-102010 007 541
- DE-A1-102016 004 405
- US-A1- 2016 318 230
- US-B2- 7 914 726

## Beschreibung

Die Erfindung betrifft ein Verfahren zur Herstellung von mit einem flüssigen Füllgut gefüllten Behältern aus thermisch konditionierten Vorformlingen aus einem thermoplastischen Material nach dem Oberbegriff von Anspruch 1 und eine Vorrichtung zur Herstellung von mit einem flüssigen Füllgut gefüllten Behältern aus temperaturkonditionierten Vorformlingen aus einem thermoplastischen Material nach dem Oberbegriff von Anspruch 7.

Bekannt ist die Herstellung von Behältern durch Blasformen aus Vorformlingen aus einem thermoplastischen Material, beispielsweise aus Vorformlingen aus PET (Polyethylenterephthalat), wobei die Vorformlinge innerhalb einer Blasmaschine unterschiedlichen Bearbeitungsstationen zugeführt werden. Typischerweise weist eine Blasmaschine eine Heizvorrichtung zum Temperieren bzw. zum thermischen Konditionieren der Vorformlinge sowie eine Blaseinrichtung mit wenigstens einer Blasstation auf, in deren Bereich der jeweils zuvor temperaturkonditionierte Vorformling zu einem Behälter expandiert wird. Die Expansion erfolgt mit Hilfe eines Druckgases (Druckluft) als Druckmedium, das mit einem Formdruck in den zu expandierenden Vorformling eingeleitet wird. Der verfahrenstechnische Ablauf bei einer derartigen Expansion des Vorformlings wird in der DE 43 40 291 A1 erläutert. Der grundsätzliche Aufbau einer Blasstation ist in der DE 42 12 583 A1 beschrieben. Möglichkeiten der thermischen Konditionierung der Vorformlinge sind in der DE 23 52 926 A1 erläutert. Unter thermischer Konditionierung wird dabei verstanden, dass der Vorformling auf eine für die Blasumformung geeignete Temperatur erwärmt und dem Vorformling ggf. ein Temperaturprofil in Längsrichtung und/oder in Umfangsrichtung aufgeprägt wird. Die Blasformung von Behältern aus Vorformlingen unter zusätzlicher Verwendung einer Reckstange ist ebenfalls bekannt.

Gemäß einem typischen Weiterverarbeitungsverfahren werden die durch Blasformen hergestellten Behälter einer nachfolgenden Fülleinrichtung zugeführt und hier mit dem vorgesehenen Produkt oder Füllgut gefüllt. Es werden also eine separate Blasmaschine und eine separate Füllmaschine verwendet. Bekannt ist es dabei auch, die separate Blasmaschine und die separate Füllmaschine zu einem Maschinenblock, d.h. zu einer verblockten Blas-Füll-Einrichtung zusammenzufassen, wobei weiterhin das Blasformen und das Füllen an gesonderten Maschinenkomponenten und zeitlich nacheinander erfolgen.

Es wurde weiterhin bereits vorgeschlagen, Behälter, insbesondere auch in Form von Flaschen, aus thermisch konditionierten Vorformlingen herzustellen und dabei gleichzeitig mit einem flüssigen Füllgut zu befüllen, welches als hydraulisches Druckmedium zum Expandieren des Vorformlings bzw. zum Ausformen des Behälters mit einem Form- und Fülldruck zugeführt wird, sodass zeitgleich mit dem Füllen der jeweilige Vorformling in den Behälter umgeformt wird. Derartige Verfahren, bei denen ein gleichzeitiges Formen und Füllen des jeweiligen Behälters erfolgt, können auch als hydraulische Umformverfahren oder als hydraulische Behälterformung bezeichnet werden. Auch hier ist es bekannt, diese Umformung durch den Einsatz einer Reckstange zu unterstützen. Auch hier wird der Vorformling vor dem Form- und Füllvorgang zunächst temperaturkonditioniert, das heißt auf eine für die hydraulische Umformung geeignete Temperatur erwärmt und ggf. ein Temperaturprofil aufgeprägt.

Bei einem Formen der Behälter aus den Vorformlingen durch das Füllgut selbst, d.h. unter Verwendung des Füllgutes als hydraulisches Druckmedium, wird für das Formen und Füllen der Behälter nur noch eine Maschine benötigt, die dafür allerdings eine erhöhte Komplexität aufweist. Ein Beispiel für eine solche Maschine zeigt die US 7,914,726 B2. Weitere Beispiele zeigen die DE 10 2010 007 541 A1 und die US 2016/ 0 318 230 A1.

Das gleichzeitige Formen und Füllen eines Behälters aus einem Vorformling erfolgt in einer Umformstation, die unter anderem eine mehrteilig ausgebildete Form aufweist. Die Mehrteiligkeit der Form ist erforderlich, um einen Vorformling in die Form einsetzen zu können und nach Abschluss des Form- und Füllprozesses den fertig ausgeformten und gefüllten Behälter aus der Form entnehmen zu können. Die mehrteilig ausgebildete Form ist dabei so in der Umformstation angeordnet und ausgebildet, dass die Form einen geschlossenen Zustand und einen geöffneten Zustand einnehmen kann. Im geschlossenen Zustand umschließt die mehrteilige Form eine innere Kavität und im geschlossenen Zustand bildet die mehrteilige Form eine Forminnenwand, gegen die der Vorformling bei geschlossener Form expandiert wird durch Zuführung des flüssigen Füllgutes unter einem Druck in den Vorformling und in die aus dem Vorformling entstehende Behälterblase bis zum Erreichen der endgültigen Behälterform, wobei dieser Umformungsprozess bevorzugt mindestens zeitweilig durch eine Reckstange unterstützt wird, indem diese Reckstange in den Vorformling eingefahren wird gegen den geschlossenen Vorformlingsboden. Die Reckstange hat die Aufgabe, den Vorformling in dessen Achsrichtung zu recken und dessen Expansion zumindest zeitweilig zu führen. Weiterhin ist es üblich, dass die Umformstationen zyklisch bzw. periodisch mit einem Vorformling beschickt und zyklisch bzw. periodisch fertig umgeformte Behälter aus der Form entnommen werden. Bekannt sind zum Beispiel taktweise arbeitende Maschinen mit mehreren Umformstationen oder auch nach dem Rundläuferprinzip arbeitende Maschinen mit kontinuierlich umlaufenden Arbeitsrädern, auf denen umfangsbeabstandet und in radialem Abstand zu einer Umlaufachse des Arbeitsrades mehrere Umformstationen angeordnet sind. Um diese Maschinen rotierender Bauart geht es in der vorliegenden Erfindung.

Gegenüber den Herstellungsverfahren und gegenüber den Vorrichtungen bei der Blasformung von Vorformlingen zu Behältern unter Verwendung eines Druckgases ergeben sich bei der Umformung von Vorformlingen in Behälter bei gleichzeitiger Befüllung durch Verwendung des Füllgutes als flüssiges Druckmedium Besonderheiten und Probleme, die bisher noch nicht sämtlich zufriedenstellend gelöst sind. Die vorliegende Erfindung betrifft eine solche Besonderheit und ein solches Problem, das bei nach dem Rundläuferprinzip arbeitenden Maschinen auftritt.

Spielten Zentrifugalkräfte bei der Behälterformung durch Einleiten eines Gases als Druckmedium bisher keine nennenswerte Rolle, so ist bei der Herstellung des Behälters durch Einleiten einer Flüssigkeit unter Druck die Zentrifugalkraft deutlich stärker ausgeprägt, da die eingeleitete Flüssigkeit eine viel größere Masse als ein Druckgas hat und daher mit viel größerer Kraft nach außen gedrückt wird. Dies hat einerseits zur Folge, dass der radial außen liegende Wandbereich des Vorformlings bzw. der sich entwickelnden Behälterblase stärker durch das eingefüllte Füllgut gekühlt wird.

Andererseits wurde festgestellt, dass der Vorformling sich radial außen früher an die Forminnenwand anlegen wird. Dieser Effekt wird zwar teilweise durch die Verwendung einer Reckstange reduziert. Gleichwohl führt die Zentrifugalkraft zu dem genannten Effekt, dass ein bestimmter Bereich der sich entwickelnden Behälterblase, nämlich der radial außen liegende Bereich, früher als ein radial innen liegender Bereich zur Anlage an die Forminnenwand kommt und dadurch z.B. früher abkühlt, wenn die Forminnenwand kälter als der Vorformling bzw. die Behälterblase ist, was regelmäßig der Fall ist, sofern nicht Hot-Fill-Form- und Füllprozesse vorliegen, bei denen die Form z.B. auf einer erhöhten Temperatur gehalten ist, die nahe der Umformtemperatur der Vorformlinge liegen kann. Nachteilig ist dabei, dass die Temperatur im Vorformling bzw. in der sich entwickelnden Behälterblase maßgeblichen Einfluss auf die Materialverteilung im fertigen Behälter hat. Insofern führen die genannten Abkühleffekte zu einer Abweichung der Materialverteilung im fertigen Behälter von der angestrebten Materialverteilung. Die EP 2 930 005 A1 beschreibt bereits dieses Problem, das spezifisch für den simultan ausgeführten Form- und Füllprozess von Behältern aus Vorformlingen ist, und schlägt zur Lösung dieses Problems eine als konstruktiv aufwendig und Folgeprobleme mit sich bringende Lösung vor.

Der vorliegenden Erfindung liegt daher die Aufgabe zu Grunde, ein Verfahren und eine Vorrichtung für die Herstellung von gefüllten Behältern aus temperaturkonditionierten Vorformlingen bereitzustellen, die jeweils bei weiterhin hohen Form- und Füllgeschwindigkeiten das zuvor geschilderte Problem lösen.

Diese Aufgabe wird gelöst durch ein Verfahren mit den Merkmalen des Anspruchs 1. Danach ist vorgesehen, dass die thermischen Folgen der Zentrifugalkraft kompensiert werden von einer Kompensationseinrichtung. Diese Kompensationseinrichtung soll als Temperiereinrichtung ausgeführt sein, um dem Vorformling ein kompensierendes Temperaturprofil aufzuprägen, wobei dieses Temperaturprofil in seiner Symmetrie und in seiner Größe ausgeführt ist, die oben beschriebenen thermischen Folgen der Umlaufbewegung der Behälter und des darin eingefüllten Umformfluides zu kompensieren. Diese thermischen Folgen sind primär das eingangs erläuterte vorzeitige Anlegen des radial außen liegenden Wandbereichs des Vorformlings an die Forminnenwand. Die Kompensationseinrichtung in Form der Temperiereinrichtung ist erfindungsgemäß ausgeführt, dem Vorformling in dessen Umfangsrichtung ein Temperaturprofil aufzuprägen, das nicht punktsymmetrisch zur Vorformlingslängsachse ist, wobei sich diese Symmetriebetrachtung natürlich auf einen Schnitt senkrecht zu dieser Vorformlingslängsachse bezieht, betrachtet wird also die Temperaturverteilung in Umfangsrichtung in dieser Schnittebene, und damit einen temperaturausgezeichneten Teilumfangsbereich im Vorformling erzeugt. Der Vorformling wird dann so ausgerichtet in die Form eingesetzt, dass der temperaturausgezeichnete Teilumfangsbereich in radialer Richtung des rotierend umlaufenden Arbeitsrades weist. Ein geeignetes, aufzuprägendes Temperaturprofil kann dazu z.B. empirisch ermittelt werden durch einige Versuche, z.B. indem die Materialverteilung, z.B. gemessen anhand von Wandstärken, in Umfangsrichtung des Behälters ermittelt wird bei Behältererzeugung ohne Kompensation und bei vorgegebenen kompensierenden Temperaturprofilen. Es ist auch möglich, das kompensierende Temperaturprofil durch eine Steuerung bzw. Regelung und durch Messung von Wandstärken im laufenden Betrieb einzustellen und/oder nachzuregeln.

Diese Aufgabe wird auch gelöst durch eine Vorrichtung mit den Merkmalen nach Anspruch 7. Danach ist in der Vorrichtung eine Kompensationseinrichtung vorgesehen, die wie bereits zum Verfahrensanspruch 1 erläutert der Kompensation der thermischen Folgen der Zentrifugalkraft dient, und die eine Temperiereinrichtung aufweist. Dabei ist die Temperiereinrichtung steuerungstechnisch ausgebildet und eingerichtet für die Erzeugung des oben erläuterten kompensierenden Temperaturprofiles im Vorformling, und die Kompensationseinrichtung weist weiterhin eine Vorformlingsausrichteinrichtung auf zum ausgerichteten Einsetzen des temperaturprofilierten Vorformlinges in eine Form einer Umformstation. Die Temperiereinrichtung ist dabei ausgebildet und eingerichtet, einem Vorformling ein Temperaturprofil aufzuprägen, das nicht punktsymmetrisch zur Vorformlingslängsachse ist, um dadurch einen temperaturausgezeichneten Teilumfangsbereich im Vorformling zu erzeugen. Die Symmetriebetrachtung bezieht sich auf einen Schnitt senkrecht zur Vorformlingslängsachse, betrachtet wird also die Temperaturverteilung in Umfangsrichtung in dieser Schnittebene. Die Vorformlingsausrichteinrichtung wiederum ist ausgebildet und eingerichtet, den Vorformling so ausgerichtet in die Form einzusetzen, dass der temperaturausgezeichnete Teilumfangsbereich in radialer Richtung weist. Die im vorstehenden Absatz gegebenen Erläuterungen zum Verfahren gelten hier entsprechend.

Ziel sowohl der vorstehend beschriebenen Vorrichtung als auch des vorstehend beschriebenen Verfahrens ist es dabei, den durch das frühzeitige und asymmetrische Anlegen eines Teilumfangsbereiches der Behälterblase an die Forminnenwand eintretenden thermischen Effekt durch eine vorhergehende korrespondierende und kompensierende Temperaturauszeichnung eines Teilumfangsbereiches des Vorformlinges aufzuheben.

Vorteilhafte Ausführungsformen und Konkretisierungen dieser allgemeinen erfindungsgemäßen technischen Lehre sind in den Unteransprüchen angegeben oder ergeben sich aus der Figurenbeschreibung.

Es ist zu berücksichtigen, dass die beschriebene und beanspruchte kompensierende Temperaturauszeichnung der Vorformlinge zu der bekannten Temperaturkonditionierung hinzutritt, ggf. tritt auch das bekannte Preferential heating hinzu.

Es ergeben sich diverse Möglichkeiten zur Realisierung der erfindungsgemäßen Temperaturauszeichnung eines Teilumfangsbereiches eines Vorformlinges. So ist es z.B. grundsätzlich möglich, zwischen einer gezielten Kühlung oder einer gezielten Erwärmung des temperaturauszuzeichnenden Teilumfangsbereiches zu wählen. Es ist grundsätzlich auch möglich, die Temperaturauszeichnung eines Teilumfangsbereiches dadurch zu erreichen, dass die dazu komplementären Bereiche gezielt gekühlt oder erwärmt werden. Es ist auch möglich, einen Teilumfangsbereich gezielt zu kühlen und einen anderen Bereich gezielt zu erwärmen, um die erfindungsgemäße Temperaturauszeichnung eines Teilumfangsbereiches zu erreichen. Sowohl geeignete Heizeinrichtungen für das gezielte Erwärmen als auch geeignete Kühleinrichtungen für das gezielte Kühlen sind im Stand der Technik bekannt, z.B. aus dem technischen Gebiet der Temperaturkonditionierung von Vorformlingen. Für diese Zwecke eingesetzte bekannte Heiz- und/oder Kühleinrichtungen können auch für die beschriebene erfindungsgemäße Temperaturauszeichnung eingesetzt werden. Geeignet sind z.B. im IR- oder NIR-Bereich Wärmestrahlung emittierende Heizstrahler oder Kühl- oder Warmluftgebläse.

Die oben beschriebenen thermischen Folgen der Zentrifugalkraft hängen davon ab, ob der Vorformling bzw. die sich daraus entwickelnde Behälterblase oder ob die Forminnenwand auf einer höheren Temperatur ist. Wenn die Forminnenwand z.B. kälter als der Vorformling bzw. die Behälterblase ist, wäre die thermische Folge ein früheres und stärkeres Abkühlen der Behälterblase in seinem radial außen liegenden und sich zuerst an die Forminnenwand anlegenden Bereich. Wenn hingegen die Forminnenwand auf einer höheren Temperatur gehalten ist als die Behälterblase, wäre die thermische Folge ein Erwärmen der Behälterblase in diesem radial außen liegenden Bereich. Die durch asymmetrisches Anlegen der Behälterblase an die Forminnenwand eintretende Abkühlung oder Erwärmung wäre erfindungsgemäß jeweils durch geeignete vorherige Heiz- oder Kühlmaßnahmen am Vorformling zu kompensieren. Eine Kompensation einer Abkühlung der Behälterblase in ihrem radial außen liegenden Bereich könnte z.B. aus einer gezielten Aufheizung des Vorformlings in diesem Bereich bestehen oder aus einer gezielten Abkühlung der übrigen Bereiche. Es ist auch möglich, dieses gezielte Aufheizen eines Bereiches und das gezielte Abkühlen der übrigen Bereiche gleichzeitig vorzusehen.

Von den vorstehend genannten Möglichkeiten wird sowohl für das Verfahren als auch für die Vorrichtung als vorteilhaft angesehen, dass der temperaturausgezeichnete Teilumfangsbereich stärker erwärmt wird, als die übrigen Umfangsbereiche des Vorformlings. Das gezielte Erwärmen eines Teilumfangsbereiches ist dem Fachmann bereits aus dem technischen Gebiet des sogenannten "Preferential Heating" bekannt, allerdings nicht in der anspruchsgemäßen Symmetrie, und er kann daher auf bekannte Technik und bekannte Heizeinrichtungen zurückgreifen. Weiterhin ist die gezielte Erwärmung z.B. durch Einbringen von Heizleistung mittel IR- oder NIR-Strahlung möglich. Dabei handelt es sich um Absorption von Strahlung, die über die gesamte Wanddicke und somit im gesamten Wandvolumen erfolgt. Ein schneller und direkter Eintrag von Wärmeenergie ist vorteilhaft z.B. gegenüber dem Anblasen mit einem kühlenden Medium, wodurch zunächst nur die angeblasene Oberfläche gekühlt würde, und die Abkühlung im Volumen würde dann durch langsamere thermische Prozesse erfolgen.

Insbesondere ist dabei von Vorteil, wenn der temperaturausgezeichnete Teilumfangsbereich nach dem Einsetzen des Vorformlings in die Form einer Umformstation radial nach außen weist. Das kompensierende Temperaturprofil ist dadurch einfacher einzustellen und zu ermitteln, da es einen direkten geometrischen Zusammenhang zwischen dem temperaturausgezeichneten Bereich und dem zuerst zur Anlage an die Forminnenwand gelangenden Bereich gibt. Der zuerst in Anlage zur Forminnenwand gelangende Bereich wäre nämlich dadurch auch der temperaturausgezeichnete Bereich.

Die thermischen Folgen der Zentrifugalkraft sind abhängig von der Umlaufgeschwindigkeit des Arbeitsrades. Aus diesem Grunde ist es sowohl für die Vorrichtung als auch für das Verfahren von Vorteil, wenn die Kompensation der thermischen Folgen von der Umlaufgeschwindigkeit abhängig ausgeführt wird, indem das von der Kompensationseinrichtung dem Vorformling aufgeprägte Temperaturprofil in Abhängigkeit von der Umlaufgeschwindigkeit des Arbeitsrades gewählt oder geregelt bzw. gesteuert wird.

Es wäre möglich, die Aufprägung des in den vorstehenden Absätzen erläuterten kompensierenden Temperaturprofiles in den Vorformlingen z.B. zwischen der Heizvorrichtung und der Umformstation oder zwischen dem Einlaufbereich in die Form- und Füllmaschine und der Heizvorrichtung anzuordnen, z.B. auf einem dazwischen angeordneten Übergaberad. Dort könnte z.B. die anspruchsgemäße Tempereinrichtung für die Erzeugung des kompensierenden Temperaturprofiles angeordnet werden. Es wird allerdings mit Vorteil vorgeschlagen, dass die Aufprägung des kompensierenden Temperaturprofiles in der Heizstrecke durch die Heizvorrichtung für die Vorformlinge erfolgt. Die erfindungsgemäße Temperiereinrichtung wäre also in der Heizstrecke anzuordnen. Beim Durchlaufen der Heizvorrichtung würde der Vorformling also sowohl die im Stand der Technik bekannte Temperaturkonditionierung für die Umformung erhalten als auch die erfindungsgemäße Aufprägung eines Temperaturprofiles in Umfangsrichtung für die Kompensation der thermischen Folgen der Zentrifugalkraft, nämlich die Temperaturauszeichnung eines Umfangsbereiches. Die für die Temperaturkonditionierung verwendeten Heizeinrichtungen könnten dadurch ggf. auch für die Erzeugung des Kompensationstemperaturprofiles verwendet werden. Dazu müsste allerdings die Steuerung bzw. die Regelung der bekannten Heizeinrichtungen verändert werden, ggf. müsste der Vorformling z.B. beim Durchlaufen der Heizstrecke anders als bisher bekannt bewegt werden. Das Gesamttemperaturprofil des Vorformlinges bei Verlassen der Heizstrecke wäre dann im Grunde die Überlagerung des bekannten Profils aufgrund der üblichen Temperaturkonditionierung (ggf. mit Preferential heating) zuzüglich des Temperaturprofiles, das zu Zwecken der Kompensation dem Vorformling aufgeprägt wird.

Der sich zuerst an die Forminnenwand anlegende Teilumfangsbereich wird einen Teilumfangswinkel φ von kleiner 180° aufweisen. Aus diesem Grunde wird bevorzugt, dass auch der temperaturausgezeichnete Teilumfangsbereich einen Teilumfangswinkel φ von kleiner 180°, bevorzugt kleiner 120°, weiter bevorzugt von kleiner 90° aufweist.

Die beschriebene Kompensation durch gezieltes Aufprägen eines Temperaturprofiles in den Vorformling in dessen Umfangsrichtung hat eine gewisse Ähnlichkeit zum bekannten Gebiet des Preferential Heating, worunter generell die ungleichmäßige Temperierung von Vorformlingen in deren Umfangsrichtung verstanden wird. Beim Preferential Heating wird eine derartige ungleichmäßige Temperierung mit stärker erwärmten Umfangsbereichen und mit weniger stark erwärmten Umfangsbereichen angewendet, wenn aus den Vorformlingen Behälter hergestellt werden sollen, deren Querschnitt von einer kreisrunden Form abweicht. Die Abweichung kann beispielsweise darin bestehen, dass Behälter mit ovalem Querschnitt oder beispielsweise mit dreieckigem oder viereckigem Querschnitt produziert werden sollen. Das im Rahmen des Preferential Heating dem Vorformling aufgeprägte Temperaturprofil folgt dabei der Symmetrie des zu erzeugenden Behälters, ist dabei punktsymmetrisch bezüglich der Vorformlingslängsachse und dient nicht der erfindungsgemäßen Kompensation von thermischen Effekten, die bedingt sind durch und die spezifisch sind für das hydraulische Ausformen von Vorformlingen auf Maschinen rotierender Bauart durch Einleiten eines flüssigen Formfluides unter Druck in einen Vorformling. Sämtliche nachstehend angesprochenen, nicht gattungsgemäßen Dokumente zum Stand der Technik betreffen das blasformende Herstellen von Behältern aus Vorformlingen durch das Einleiten eines gasförmigen Formfluides unter Druck in einen Vorformling.

Die blasformende Herstellung unrunder Behälter ist z.B. in der US 3,892,830 beschrieben. Eine punktsymmetrische Temperaturkonditionierung durch selektive Abschattung wird in der DE 33 14 106 A1 angegeben. In der EP 0 620 099 B1 und der inhaltsgleichen DE 694 01 024 T2 findet sich eine Zusammenstellung von aus dem Stand der Technik bekannten Verfahren zur Temperaturkonditionierung von Vorformlingen. Weiterhin ist im Stand der Technik bekannt, einen Vorformling zunächst in einem ersten Heizungsabschnitt einer Heizvorrichtung in Umfangsrichtung homogen, das heißt gleichmäßig zu erwärmen, und anschließend in einem zweiten Heizungsabschnitt in Umfangsrichtung das für das Preferential Heating gewünschte Temperaturprofil zu erzeugen. Einen solchen Stand der Technik zeigt die WO 97/32713 mit einem schrittweise arbeitenden Rotationsantrieb für die Vorformlinge. Die US 5,853,775 offenbart zwei Heizungsabschnitte mit einer ebenfalls schrittweise umlaufenden Transportkette mit einer Vielzahl von Vorformlingen tragenden Kettengliedern in Form von Transportdornen. In einer ersten Heizstation erfolgt zunächst eine homogene Erwärmung der Vorformlinge und in einer der ersten Station gegenüberliegenden zweiten Heizstation erfolgt eine umfangsprofilierte Erwärmung der Vorformlinge. In beiden Heizstationen werden die Vorformlinge mittels einer nur der jeweiligen Heizstation zugeordneten Kette gedreht. Die DE 10 2007 016 027 A1 lehrt eine Vorrichtung für das Preferential Heating, bei der eine Drehbewegung der Vorformlinge von einem Profilstrang erzeugt wird, der mit einem Zahnrad des Transportmittels zusammenwirkt, das den Vorformling durch die Heizstrecke trägt und das gemeinsam mit weiteren Transportmitteln zu einer umlaufenden Transportkette verbunden ist. Der Profilstrang läuft beabstandet von der Transportkette um die Heizstrecke um und kämmt mit dem Zahnrad des Transportmittels. Dabei wird der Profilstrang mit konstanter oder variierender Umlaufgeschwindigkeit angetrieben. Die DE 10 2016 004 405 A1 zeigt eine Vorrichtung für das Preferential Heating, bei der die Drehbewegung der Vorformlinge während des Preferential Heatings unterbunden ist.

Ein deutlicher Unterschied zu diesem im Stand der Technik bekannten Preferential Heating ist dabei, dass das erfindungsgemäße, den Zentrifugalkrafteinfluß kompensierende Temperaturprofil in Umfangsrichtung des Vorformlings von der Symmetrie des herzustellenden Behälters unabhängig ist. Beim Preferential Heating folgt die Symmetrie des dem Vorformling in Umfangsrichtung aufgeprägten Temperaturprofiles der Symmetrie der herzustellen Flasche, während das erfindungsgemäße kompensierende Temperaturprofil in Umfangsrichtung von der Symmetrie des herzustellenden Behälters abweichen kann und in der Regel auch davon abweicht. Das erfindungsgemäße Verfahren und die erfindungsgemäße Vorrichtung führen zu einem nicht-punktsymmetrischen Umfangstemperaturprofil und somit zu einer Temperaturauszeichnung eines Umfangsbereiches des Vorformlinges. Sie sind aber besonders bei der Herstellung punktsymmetrischer Behälter mit Vorteil einsetzbar, insbesondere bei der Herstellung von Behältern mit n-facher Drehsymmetrie mit n={2,3,4,6,8}, insbesondere bei der Herstellung kreissymmetrischer Behälter.

Weitere Vorteile, Merkmale und Details der Erfindung ergeben sich aus den im Folgenden beschriebenen Ausführungsbeispielen unter Bezugnahme auf schematische Zeichnungen. Es zeigen:
- Fig. 1: eine stark schematisierte Darstellung einer Form- und Füllvorrichtung,
- Fig. 2: einen Längsschnitt durch eine Form einer Umformstation, in der ein Vorformling gereckt und expandiert wird, mit einer sich entwickelnden Behälterblase,
- Fig. 3a: ein erstes Ausführungsbeispiel für eine erfindungsgemäße Temperiereinrichtung,
- Fig. 3b: ein zweites Ausführungsbeispiel für eine erfindungsgemäße Temperiereinrichtung,
- Fig. 4: eine Skizze zu einem weiteren Ausführungsbeispiel der vorliegenden Erfindung mit einer Vorformlingsausrichteinrichtung in einer Aufsicht,
- Fig. 5: eine Seitenansicht zu einem weiteren Ausführungsbeispiel der Erfindung,
- Fig. 6a, 6b: vergrößerte Ansichten zu dem Ausführungsbeispiel der Figur 5 im Bereich der Ausrichteinrichtung für die Vorformlinge,
- Fig. 7: eine Detailansicht aus Figur 4 im Bereich des Kopfrades zur dortigen Ausrichtein richtung,
- Fig. 8: perspektivische Ansichten zu Details aus Figur 7,
- Fig. 9: Schnittansichten von oben zum Gegenstand in der linken Bildhälfte von Fig. 8.

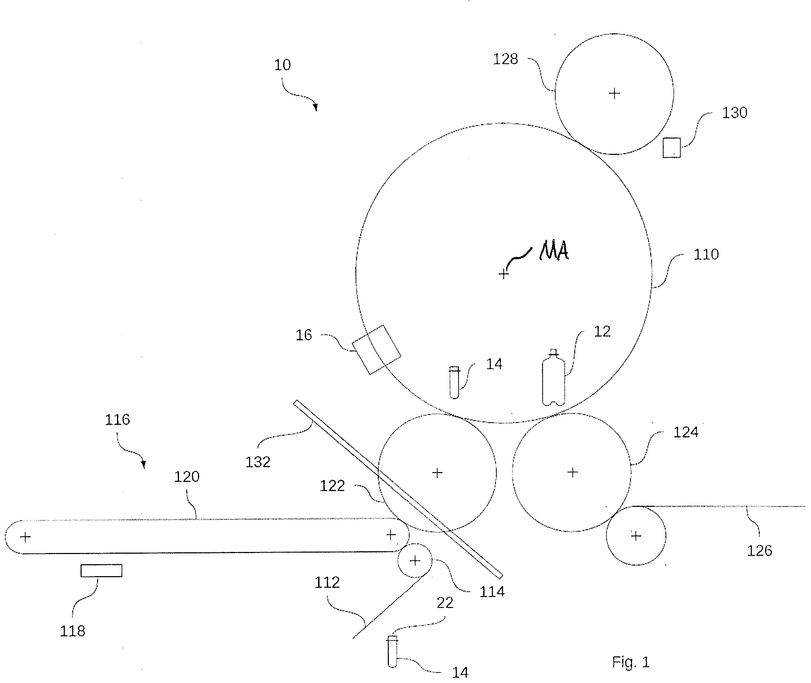

Der prinzipiell aus dem Stand der Technik bekannte Aufbau einer kombinierten Form- und Füllmaschine 10 ist in Figur 1 dargestellt. Die Darstellung zeigt die bevorzugte Ausbildung einer solchen Füllvorrichtung 10 in der Art einer Rotationsmaschine mit einem Umformstationen bzw. Form- und Füllstationen 16 tragenden, rotierenden Arbeitsrad 110. Von einer Zuführeinrichtung 112 werden schematisch dargestellte Vorformlinge 14, die auch als Preform bezeichnet werden, unter Verwendung eines Übergaberades 114 kontinuierlich einer Heizvorrichtung 116 zugeführt. Im Bereich der Heizvorrichtung 116, in der die Vorformlinge 14 entlang einer Heizstrecke transportiert und dabei thermisch konditioniert werden, können die Vorformlinge 14 anwendungsabhängig beispielsweise mit ihren Mündungsabschnitten 22 in lotrechter Richtung nach oben oder in lotrechter Richtung nach unten transportiert werden. Die Heizvorrichtung 116 ist beispielsweise mit Heizeinrichtungen 118 ausgestattet, die entlang einer Transporteinrichtung 120 zur Ausbildung der Heizstrecke angeordnet sind. Als Transporteinrichtung 120 kann beispielsweise eine umlaufende Kette mit Transportdornen zur Halterung der Vorformlinge 14 verwendet werden. Als Heizeinrichtungen 118 eignen sich beispielsweise IR-Strahler oder Licht emittierende Dioden (LED) oder NIR-Strahler. Da solche Heizeinrichtungen in vielfältiger Art im Stand der Technik bekannt sind und die konstruktiven Einzelheiten der Heizeinrichtung für die vorliegende Erfindung nicht wesentlich sind, kann auf eine detailliertere Beschreibung verzichtet und auf den Stand der Technik verwiesen werden, insbesondere auf den Stand der Technik zu Heizeinrichtungen von Blas- und von Streckblasmaschinen.

Nach einer ausreichenden Temperierung, auch thermische Konditionierung genannt, werden die Vorformlinge 14 von einem Übergaberad 122 zu einem rotationsfähig angeordneten, d.h. um eine vertikale Maschinenachse MA umlaufend antreibbaren Arbeitsrad 110 bzw. an Form- und Füllstationen 16 übergeben, die an dem Arbeitsrad 110 umfangsverteilt angeordnet sind. Das Arbeitsrad 110 ist mit einer Mehrzahl solcher Form- und Füllstationen 16 ausgestattet, in deren Bereich sowohl eine Umformung der Vorformlinge 14 in die schematisch dargestellten Behälter 12 als auch eine Befüllung der Behälter 12 mit dem vorgesehenen Füllgut erfolgt. Das Formen jedes Behälters 12 erfolgt hierbei zeitgleich mit der Befüllung, wobei das Füllgut als Druckmedium beim Formen dient.

Nach dem Formen und Füllen werden die Behälter 12 von einem Entnahmerad 124 vom Arbeitsrad 110 entnommen, weitertransportiert und einer Ausgabestrecke 126 zugeführt. Das Arbeitsrad 110 läuft im Produktionsbetrieb kontinuierlich mit einer gewünschten Umlaufgeschwindigkeit um. Während eines Umlaufs erfolgt das Einsetzen eines Vorformlings 14 in eine Form- und Füllstation 16, die Expansion des Vorformlings 14 zu einem Behälter 12 inklusive Füllung mit einem Füllgut und ggf. inklusive Reckung, falls eine Reckstange vorgesehen ist, und die Entnahme des Behälters 12 aus der Form- und Füllstation 16.

Gemäß der Ausführungsform in Figur 1 ist weiterhin optional vorgesehen, dem Arbeitsrad 110 über eine Eingabeeinrichtung 128 schematisch dargestellte Verschlusskappen 130 zuzuführen. Hierdurch ist es möglich, auf dem Arbeitsrad 110 auch bereits ein Verschließen der Behälter 12 durchzuführen und unter Verwendung der Entnahmeeinrichtung 124 fertig geformte, gefüllte und verschlossene Behälter 12 zu handhaben.

Als Material für die Vorformlinge 14 können unterschiedliche thermoplastische Materialien verwendet werden. Beispielhaft seien Polyethylenterephthalat (PET), Polyethylen (PE), Polyethylennaphthalat (PEN) oder Polypropylen (PP) genannt. Die Dimensionierung sowie das Gewicht der Vorformlinge 14 sind an die Größe, das Gewicht und/oder an die Gestaltung der herzustellenden Behälter 12 angepasst.

Im Bereich der Heizvorrichtung 116 sind typischerweise eine Vielzahl von elektrischen und elektronischen Bauteilen angeordnet. Darüber hinaus sind die Heizeinrichtungen 118 mit feuchtigkeitsempfindlichen Reflektoren versehen. Da im Bereich des Arbeitsrades 110 unter Verwendung des flüssigen Füllgutes eine Befüllung und Formung der Behälter 12 erfolgt, sollte zur Vermeidung elektrischer Probleme dafür gesorgt werden, dass ein unbeabsichtigter Eintrag von Feuchtigkeit in den Bereich der Heizvorrichtung 116 vermieden wird. Dies kann beispielsweise durch eine Abschotteinrichtung 132 erfolgen, die zumindest einen Spritzschutz bietet. Darüber hinaus ist es auch möglich, im Bereich des Übergaberades 122 verwendete Transportelemente für die Vorformlinge 14 geeignet zu temperieren oder mit Druckgasstößen derart zu beaufschlagen, dass anhaftende Feuchtigkeit nicht in den Bereich der Heizvorrichtung 116 gelangen kann.

Eine Handhabung der Vorformlinge 14 und/oder der Behälter 12 erfolgt vorzugsweise unter Verwendung von Zangen und/oder den Mündungsabschnitt 22 wenigstens bereichsweise von innen oder von außen beaufschlagenden Klemm- oder Steckdornen. Solche Handhabungsmittel sind ebenfalls aus dem Stand der Technik hinlänglich bekannt.

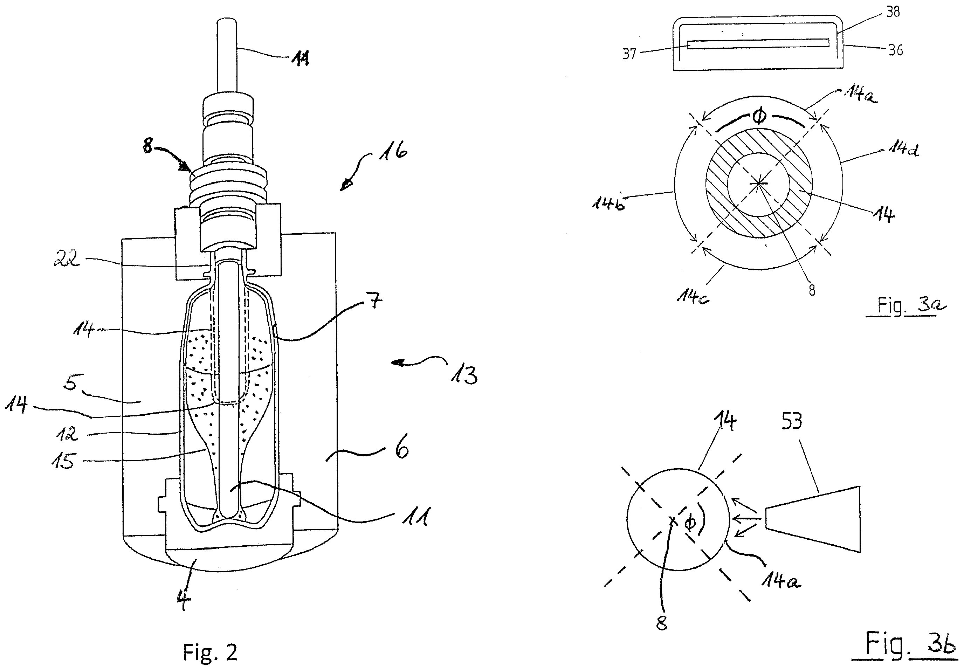

Fig. 2 zeigt in einer prinzipienhaften Schnittansicht durch eine Form- und Füllstation 16 zusätzlich zum geblasenen Behälter 12 auch gestrichelt eingezeichnet den Vorformling 14 und schematisch eine sich entwickelnde Behälterblase 15. Im dargestellten Ausführungsbeispiel ist eine Reckung des Vorformlings 14 in dessen Längsrichtung X durch eine Reckstange 11 vorgesehen. Im gezeigten Prozesszustand des Umform- und Füllvorganges ist die Form 13 der Umformstation 16 in einem geschlossenen Zustand und die Reckstange 11 bereits bis zum Erreichen ihrer unteren Endposition verfahren. Die Reckung des Vorformlings 14 in Achsrichtung X ist abgeschlossen, während in Bezug auf die Behälterblase 15 die Expansion quer zur Achsrichtung X noch nicht abgeschlossen ist. Die aus einer Bodenform 4 und zwei Seitenformhälften 5 und 6 bestehende Form 13 umschließt eine innere Kavität, die begrenzt ist durch die Forminnenwand 7, gegen die der Vorformling 14 bzw. die sich entwickelnde Behälterblase 15 expandiert wird durch Einleiten des Füllgutes 3 unter einem Formdruck. Die Zuführung des Füllgutes 3 unter Druck erfolgt über einen Form- und Füllkopf 8, der dichtend gegen den Mündungsabschnitt 22 des Vorformlings 14 abgesenkt worden ist und durch den z.B. durch die Reckstange 11 hindurch und/oder an der Reckstange 11 vorbei das Füllgut 3 eingeleitet wird.

Fig. 3a zeigt einen Horizontalschnitt durch einen im Bereich einer Temperaturprofilerzeugungseinrichtung 36 angeordneten Vorformling 14. Es ist erkennbar, dass die Temperaturprofilerzeugungseinrichtung 36 einen Heizstrahler 37, z.B. einen IR- oder NIR-Strahler, sowie einen Reflektor 38 aufweist. Ein Umfang des Vorformlings 14 ist bei dieser Ausführungsform in vier Winkelbereiche 14a, 14b, 14c, 14d unterteilt. In Umfangsrichtung soll die Temperierung der Winkelbereiche 14a, 14b, 14c, 14d so erfolgen, dass einer dieser Bereiche temperaturausgezeichnet wird, also z.B. eine höhere Temperatur als die übrigen Bereiche erhält. Insbesondere ist vorgesehen, dass der Heizstrahler 37 den Vorformling 14 lediglich im Winkelbereich 14a direkt bestrahlt, während die übrigen Winkelbereiche 14b, 14c, 14d keine direkte Heizbestrahlung erfahren. Entsprechend wird der Winkelbereich 14a mit dem Winkel φ des Vorformlings 14 nach der Beaufschlagung mit Heizstrahlung mit einer höheren Temperatur als die Winkelbereiche 14b, 14c, 14d versehen sein. Die Größe der jeweiligen Winkelbereiche 14a, 14b, 14c, 14d ist im gezeigten Beispiel mit jeweils 90° gewählt und kann auch davon abweichend gewählt werden.

Bei der Realisierung des gewünschten temperaturausgezeichneten Umfangsbereiches 14a des Vorformlings 14 wäre es möglich, den Vorformling 14 drehfest zu halten. Es ist aber auch möglich, eine Rotation des Vorformlings 14 um seine Längsachse 8 mit einer schrittweisen Bewegung oder kontinuierlich durchzuführen und dabei taktweise den Heizstrahler 37 einzuschalten oder freizugeben, wenn der Umfangsbereich 14a dem Heizstrahler 37 zugewandt ausgerichtet ist.

Die Temperaturprofilerzeugungseinrichtung 36 kann z.B. in der Heizvorrichtung 116 angeordnet sein, z.B. am Ende der Heizstrecke, und wie die in der Heizvorrichtung 116 vorgesehenen Heizeinrichtungen 118 aussehen. Beispielsweise ist es möglich, den Vorformling 14 zunächst vorab in Umfangsrichtung gleichmäßig zu temperieren und anschließend mit Hilfe der beschriebenen Temperaturprofilerzeugungseinrichtung 36 den temperaturausgezeichneten Bereich 14a zu erzeugen, z.B. indem ein Vorformling 14 drehfest an einer Heizeinrichtung 118 vorbeigeführt wird.

Fig. 3b zeigt eine weitere Möglichkeit zur Temperaturauszeichnung eines Umfangsbereiches 14a eines Vorformlings 14. Ein vortemperierter Vorformling 14 wird hierbei drehfest an einer Kühldüse 53 entlang bewegt, aus der ein kühlendes Gas auf den Umfangsbereich 14d strömt. Es kann beispielsweise Luft verwendet werden. Die Ausführungen zu Figur 3a bezüglich Drehung des Vorformlings 14 und bezüglich Anordnung der Kühldüse 53 in der Heizvorrichtung 116 gelten hier analog.

Denkbar ist auch, sowohl eine Kühlung eines ersten Umfangsbereiches wie exemplarisch zu Figur 3b erläutert als auch eine Erwärmung des dazu komplementären Umfangsbereiches wie zu Figur 3a erläutert vorzusehen. Denkbar ist auch, die Kühldüse 53 durch eine Heizdüse zu ersetzen und den Winkelbereich 14a mit Heizluft zu beaufschlagen.

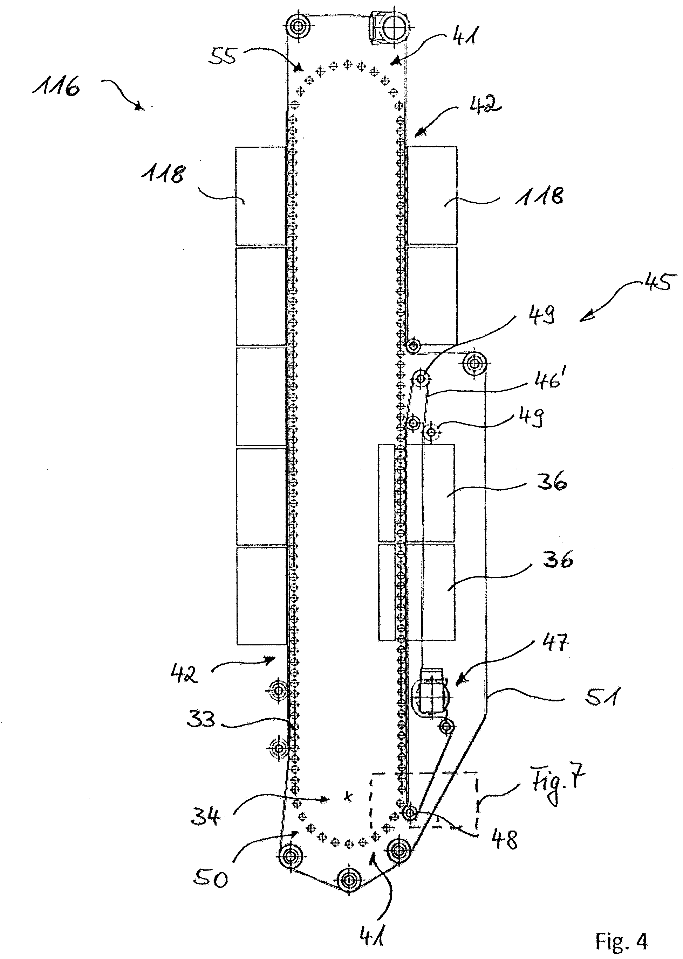

Fig. 4 zeigt in einer Ansicht von oben eine grundsätzlich aus dem Stand der Technik bekannte Heizvorrichtung 116 mit einer erfindungsgemäßen Temperaturprofilerzeugungseinrichtung 36 zur Erzeugung eines temperaturausgezeichneten Umfangsbereiches 14a eines Vorformlings 14. Die aus mehreren Transportmitteln 33 zusammengesetzte umlaufende Transportkette 50 ist durch einzelne Kettenglieder 33 angedeutet. Diese Kette 50 wird über nicht näher dargestellte Umlenkräder umgelenkt und hat im Bereich dieser Umlenkung einen gekrümmten Bereich 41 und dazwischen liegend lineare Bereiche 42. Die Vorformlingseingabe in die Heizvorrichtung 116 erfolgt im Bereich des mit Bezugszeichen 34 angedeuteten Kopfrades. Fig. 4 zeigt nicht die entsprechendem Übergaberäder zur Übergabe von Vorformlingen in die Heizvorrichtung 116 und zur Entnahme der temperierten Vorformlinge nach einem vollständigen Durchlaufen der Heizvorrichtung 116 über einen fast kompletten Umlaufzyklus der Transportkette 50.

Im in der Fig. 4 linken linearen Bereich 42 sind mehrere Heizeinrichtungen 118 vorgesehen. Typische derartige Heizeinrichtungen 118 sind zum Beispiel als Heizkästen aufgebaut mit darin aufgenommenen Heizstrahlern. In der Regel sind in dieser Heizeinrichtung 118 mehrere, im Wesentlichen horizontal verlaufende, linienförmige, Heizstrahlung emittierende Heizröhren angeordnet, die über die Vorformlingslänge verteilt angeordnet sind. Diese Heizstrahler sind in der Regel auf einer Seite des Heizkastens angeordnet und auf einer gegenüberliegenden Seite des Heizkastens ist in der Regel ein Reflektor angeordnet, der mit einem hohen Reflektionsvermögen für die verwendete Heizstrahlung ausgeführt ist. In den zwischen den Heizstrahlern und dem Reflektor gebildeten Raum werden die Vorformlinge 14 von den Transportmitteln 33 hindurchgeführt. Dabei werden die Vorformlinge 14 kontinuierlich bewegt und kontinuierlich um ihre Längsachse rotiert, um eine möglichst gleichmäßige Beheizung über den Umfang der Vorformlinge 14 zu gewährleisten. In Achsrichtung des Vorformlings 14 kann ebenfalls eine gleichmäßige Temperierung erfolgen. Es ist aber auch möglich, dass bestimmte Höhenbereiche des Vorformlings 14 auf eine höhere oder eine niedrigere Temperatur gebracht werden als andere Höhenbereiche. Fig. 4 zeigt im linken Bildbereich fünf nebeneinander angeordnete Heizkästen 118, in denen diese gleichmäßige Beheizung der Vorformlinge 14 in Umfangsrichtung erfolgt, wobei diese Zahl beliebig gewählt werden kann.

Auf dem gegenüberliegenden linearen Bereich 42 der Heizstrecke durch die Heizvorrichtung 116 befinden sich ebenfalls Heizkästen 118, 36. Die beiden von den Vorformlingen 14 zuerst durchlaufenen Heizkästen 118 auf diesem Teil der Heizstrecke sind baugleich zu den vorab beschriebenen Heizkästen 118 für die gleichmäßige Umfangstemperierung der Vorformlinge 14. Es folgt dann eine Lücke sowie weiter in Richtung der Vorformlingsbewegung zwei für die Temperaturauszeichnung eines Teilumfangsbereiches 14a der Vorformlinge 14 benötigte Heizkästen 36, die sich in ihrem Aufbau von den vorab geschilderten Heizkästen 118 unterscheiden. Auch hier sind typischerweise auf einer ersten Seite des Heizkastens 36 mehrere Heizstrahler angeordnet. Auf der gegenüberliegenden Seite des Heizkastens 36 ist optional allerdings kein Reflektor angeordnet. Dadurch soll gewährleistet werden, dass die durch diese Temperaturauszeichnungsheizkästen 36 geführten Vorformlinge 14 nicht auf beiden gegenüberliegenden Seiten gleich temperiert werden. Dies kann auch erreicht werden oder noch dadurch verstärkt werden, dass Heizstrahler verwendet werden, die eine Strahlung emittieren mit einem hohen Strahlungsanteil in einem Wellenlängenbereich, der zu einem höheren Grad vom Vorformlingsmaterial absorbiert wird, als bei den Heizkästen 118 für die gleichmäßige Umfangstemperierung. Auf diese Weise kann ein in Umfangsrichtung gewünschtes Temperaturprofil erzeugt werden, nämlich ein Umfangsbereich mit einer ausgezeichneten Temperatur, vorliegend mit einer höheren Temperatur, nämlich der den Heizstrahlern zugewandte Umfangsbereich. Die übrigen Umfangsbereiche werden eine geringere Temperatur aufweisen, nämlich die in Bewegungsrichtung und entgegen der Bewegungsrichtung weisenden Umfangsbereiche des Vorformlings 14 und der vom Heizstrahler abgewandte Umfangsbereich.

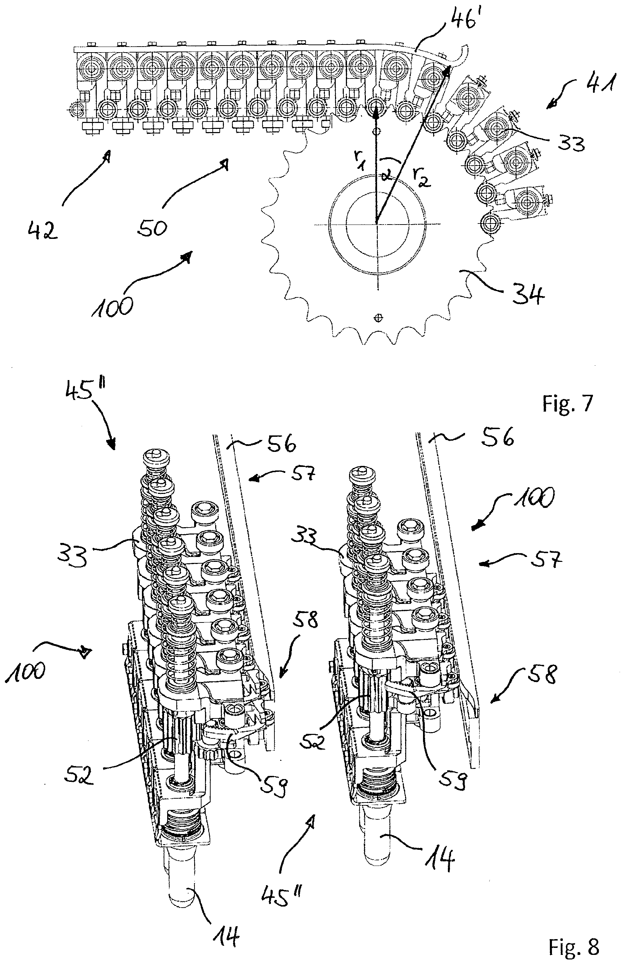

Fig. 4 zeigt weiterhin die Anordnung einer Eingriffseinrichtung 45, die im dargestellten Ausführungsbeispiel als umlaufend geführter Eingriffsriemen 46' ausgeführt ist. Der obere Umlenkbereich 49 des Eingriffsriemens 46' befindet sich zwischen den Heizkästen 118 für die gleichmäßige Umfangstemperierung der Vorformlinge 14 und denjenigen Heizkästen 36 für die Temperaturauszeichnung eines Umfangsbereiches. Dazu ist zum Beispiel eine Einschubposition für einen Heizkasten unbesetzt. Die untere Umlenkrolle 48 für den Eingriffsriemen 46' ist im Bereich des Kopfrades 34 angeordnet. Insbesondere ist diese Umlenkrolle 48 so ausgebildet, das der Eingriffsriemen 46' teilweise noch dem gekrümmten Bereich 41 um das Kopfrad 34 herum folgt. Weiterhin ist diese Umlenkrolle 48 insbesondere verschieblich ausgebildet in der Weise, dass der Eingriffsriemen 46' über eine veränderliche Wegstrecke dem gekrümmten Bereich 41 des Kopfrades folgt. Einzelheiten dazu sind in Fig. 7 dargestellt und werden in Verbindung mit Fig. 7 näher erläutert werden, insbesondere die damit erzielten Vorteile.

Der Eingriffsriemen 46' weist im dargestellten Ausführungsbeispiel einen Riemenantrieb 47 auf. Der Eingriffsriemen 46' ist dabei so ausgeführt, dass ein Eingriff in die Transportmittel 33 derart erfolgt, dass beim Durchlaufen der für die Temperaturauszeichnung ausgebildeten Heizkästen 36 keine Rotation um die Längsachse der Vorformlinge erfolgt. Dazu ist zum Beispiel vorgesehen, dass der Eingriffsriemen 46' mit der gleichen Geschwindigkeit läuft wie die Transportkette 50. Es ist dazu zum Beispiel möglich, dass eine Synchronisierung zwischen der Transportkette 50 und dem Eingriffsriemen 46' erfolgt. Es wäre aber auch denkbar, dass zum Beispiel der Eingriffsriemen 46' über keinen eigenen Antrieb verfügt, sondern zum Beispiel Mitnehmer aufweist, die in die Transportkette 50 eingreifen und dann von der Transportkette 50 mitgenommen werden. Auf diese Weise kann die Geschwindigkeit der Transportkette 50 und des Eingriffsriemens 46' auf einfache Weise gleich gehalten werden.

Fig. 4 zeigt weiterhin einen sogenannten Dorndrehriemen 51, der für die gleichmäßige Rotation der Vorformlinge 14 um ihre Längsachse bei Durchlaufen der Heizkästen 118 für die gleichmäßige Umfangstemperierung sorgt. Dieser Dorndrehriemen 51 ist außenseitig von der Transportkette 50 geführt, in alternativen Ausführungsvarianten könnte er auch innenseitig geführt werden, und verläuft in einem geringen Abstand in den linearen Bereichen 42 der Heizvorrichtung 116 parallel zur Transportkette 50. Dieser Dorndrehriemen 51 läuft vollständig um die Transportkette 50 herum und ist eine erste Eingriffseinrichtung. Ein solcher Dorndrehriemen 51 ist bereits im Stand der Technik bekannt und wirkt zum Beispiel mit einem Zahnrad 52 zusammen, das an den jeweiligen Transportmitteln 33 angeordnet ist und das auf dem Dorndrehriemen 51 abrollt. Die Umlaufgeschwindigkeit des Dorndrehriemens 51 ist im Verhältnis zur Umlaufgeschwindigkeit der Transportkette 50 so gewählt, dass eine Relativgeschwindigkeit besteht, sodass das den Vorformling 14 tragende Transportmittel 33 in eine Eigenrotation aufgrund des Abrollens des Zahnrades 52 auf dem Dorndrehriemen 51 versetzt wird.

Im Bereich zwischen den Heizkästen 118 für die gleichmäßige Umfangstemperierung und den Heizkästen 36 für die Temperaturauszeichnung eines Umfangsbereiches wird dieser Dorndrehriemen 51 weg von der Transportkette 50 geführt und der Dorndrehriemen 51 ist dadurch außer Eingriff mit den Zahnrädern 52 der Transportmittel 33. Dieses Wegführen ist vorgesehen, damit die zweite Eingriffseinrichtung 45 auf das Zahnrad 52 zugreifen kann, ohne dass der Dorndrehriemen 51 eine Störung darstellt. Dazu ist der Dorndrehriemen 51 außenseitig an der zweiten Eingriffseinrichtung 45 und an dessen Umlenk- und Führungsrollen 48, 49 herumgeführt. Außerhalb des Bereiches der Heizkästen 36 für die Temperaturauszeichnung eines Umfangsbereiches und nachdem der Eingriffsriemen 46' für einen geschlossenen Umlauf zurückgeführt wird, verläuft der Dorndrehriemen 51 wieder näher an der Transportkette 50 und gelangt im linken linearen Bereich 42 der Heizvorrichtung 116 erneut in Eingriff mit den Zahnrädern 52 der z.B. als Transportdorne ausgebildeten Transportmittel 33.

Der in Fig. 7 gezeigte vergrößerte Ausschnitt aus Fig. 4 zeigt den Eingriffsriemen 46' in seiner Erstreckung im Bereich des Kopfrades 34. Im linken, linearen Bereich befindet sich der Eingriffsriemen 46', z.B. ein Zahnriemen, in Eingriff mit dem Zahnrad 52 der Transportdorne der Transportkette 50, wobei auch andere Transportmittel 33 als Transportdorne die Kettenglieder der Transportkette 50 bilden könnten. Dieser Eingriff wird fortgesetzt in einen gekrümmten Bereich 41 der Transportkette 50 hinein und zwar verläuft der Eingriffsriemen 46' über einen Teilumfang mit einem zugehörigen Winkel α in diesem gekrümmten Bereich um das Kopfrad 34 herum, bevor der Riemen 46' von den Zahnrädern 52 abhebt und seinen Rücklauf beginnt. Im linearen Bereich 42 befinden sich der Eingriffsriemen 46' und die Transportkette 50 auf gleicher Geschwindigkeit, und aufgrund der Parallelanordnung der beiden Riemen- bzw. Kettenverläufe kann auf diese Weise der Vorformling 14 in einer festen Umfangswinkelstellung gehalten werden. Sobald allerdings der gekrümmte Bereich 41 beginnt, spreizt sich die Transportkette 50 auf und der Eingriffsriemen 46' und die Transportkette 50 laufen auf unterschiedlichen Radien r1, r2 mit unterschiedlicher Winkelgeschwindigkeit. Aus diesem Grund erfolgt in diesem gekrümmten Bereich 41 des Kopfrades 34 eine Drehung des Transportmittels 33 und des davon gehaltenen Vorformlings 14. Der Drehwinkel ist einerseits abhängig vom Verhältnis der Umlaufradien der Transportkette 50 und des Eingriffsriemens 46' und andererseits vom Winkel α. Durch Verschieben derjenigen Position in dem gekrümmten Bereich 41, an dem der Eingriffsriemen 46' außer Eingriff mit dem Zahnrad 52 des Transportdornes 33 gesetzt wird, kann die Drehung des Vorformlings 14 bzw. des Transportdornes 33 gezielt eingestellt werden. Zum Zwecke dieser Einstellung ist ein Umlenkmittel 48 des Eingriffsriemens 46' in diesem Bereich 41 verstellbar ausgeführt, um gezielt den in Fig. 7 gezeigten Winkel α zu verändern. Die gezielte Drehung des Vorformlings 14 bzw. des Transportdornes 33 ist gewünscht, damit der Vorformling 14 in einer bestimmten Ausrichtung in die Umformstation 16 eingesetzt wird, damit also der temperaturausgezeichnete Umfangsbereich des Vorformlings 14 bei der Übergabe auf das Arbeitsrad 110 und in die Formen der Umformstationen zum Beispiel in einer bestimmten Orientierung steht, z.B. damit der ausgezeichnete Umfangsbereich radial außen oder innen liegt. Die vorstehend beschriebene Konstruktion ist ein Beispiel für eine erfindungsgemäße Vorformlingsausrichteinrichtung. Das Einstellen einer solchen gewünschten Ausrichtung des Vorformlings 14 wird durch das gezielte Einstellen des Winkels α in Fig. 7 durch Verschieben einer Umlenkrolle 48 des Eingriffsriemens 46 unterstützt.

Der in Bezug auf die Figuren 4 und 7 beschriebene Eingriffsriemen könnte z.B. auch als eine Eingriffskette ausgeführt sein. Diese Kette müsste lediglich analog zu dem Eingriffsriemen geführt werden und in den Eingriffskörper bzw. in das Zahnrad 52 eingreifen. Andere Eingriffseinrichtungen mit gleicher Funktionalität sind auch möglich.

Ein Beispiel für eine Eingriffskette, die eine deutlich komplexere Struktur im Vergleich zu der vorstehend erwähnten Eingriffskette gemäß dem Ausführungsbeispiel der Figuren 4 und 7 aufweist und die ggf. weitere Funktionalitäten bereitstellt, wird nachfolgend erläutert, wobei in weiterer Abwandlung zu dem vorstehenden Ausführungsbeispiel kein eigener Riemen-/Kettenantrieb bzw. generalisierend kein eigener Antrieb für die Eingriffseinrichtung vorgesehen ist, sondern das nachfolgende Ausführungsbeispiel sieht ein Mitnehmen der Eingriffseinrichtung durch die Förderkette vor. Auch dies ist als Möglichkeit zu betrachten, die in dem vorstehenden Ausführungsbeispiel realisiert sein kann. Umgekehrt kann in jedem der Ausführungsbeispiele statt eines Mitnehmers bzw. statt eines mitnehmenden Eingriffs in die Förderkette, ein eigener Antrieb für die Eingriffseinrichtung vorgesehen sein.

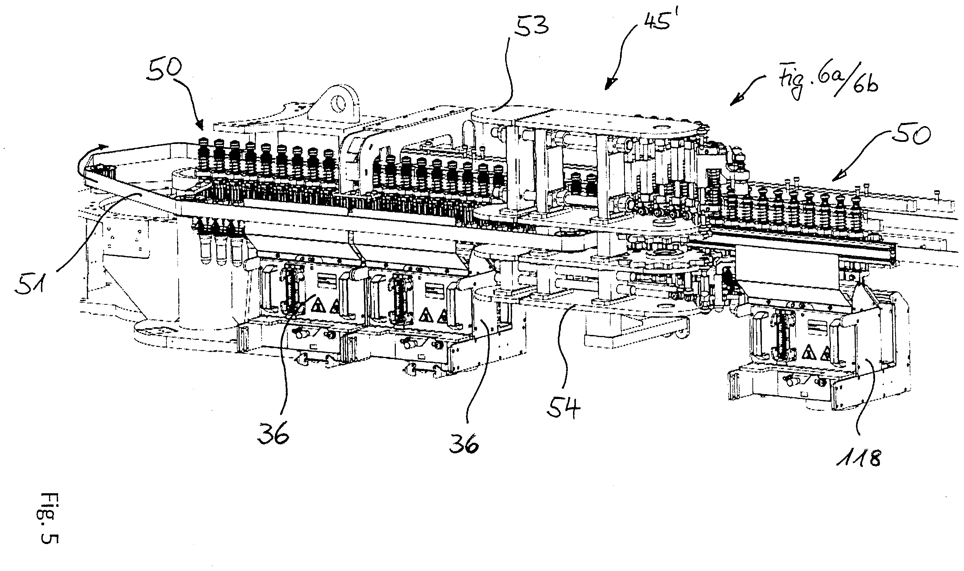

Fig. 5 zeigt in einem Teilausschnitt und in einer perspektivischen Seitendarstellung ein zweites Beispiel für eine zweite Eingriffseinrichtung 45'. Diese zweite Eingriffseinrichtung 45' ist im Wesentlichen als eine umlaufende Kette mit mehreren Kettengliedern ausgeführt. Die erste Eingriffseinrichtung 51 ist auch hier in Form eines umlaufenden Zahnriemens ausgebildet, nämlich als Dorndrehriemen. Im vorderen rechten Bereich der Fig. 5 ist ein Heizkasten 118 dargestellt, der für die gleichmäßige Temperierung eines Vorformlings 14 in Umfangsrichtung vorgesehen ist. Im linken Bereich der Fig. 5 sind zwei Heizkästen 36 dargestellt, die für die Temperaturauszeichnung eines Umfangsbereiches eines Vorformlings 14 ausgebildet sind. Im dazwischenliegenden Bereich, der durch Weglassen zum Beispiel eines Heizkastens freigeblieben ist, ist die zweite Eingriffseinrichtung 45' angeordnet. Diese Eingriffseinrichtung 45' besteht aus einem oberen Bauteil 53 und einem unteren Bauteil 54. Zwischen diesen Bauteilen 53, 54 ist der Dorndrehriemen 51 weg von der Transportkette 50 geführt und verläuft außenseitig an den Heizkästen 36 entlang. Diese gewählte Zweiteilung der Eingriffseinrichtung ist rein optional und ermöglicht z.B. das Vorsehen weiterer Funktionen in diesem Bereich der Heizvorrichtung 116. Solche weiteren Funktionen können z.B. das Ausführen einer Sterilisierung durch eine Sterilisierungseinrichtung oder z.B. das Vorsehen einer Inspektionsvorrichtung sein. Bezüglich der Sterilisierungseinrichtung wird z.B. auf die DE 10 2010 026 166 A1 verweisen und hier insbesondere auf die Fig. 5 sowie auf die dortigen Ausführungen zu den Vorteilen und zu der technischen Realisierung einer Sterilisierung von Vorformlingen im Bereich der Heizstrecke einer Heizvorrichtung.

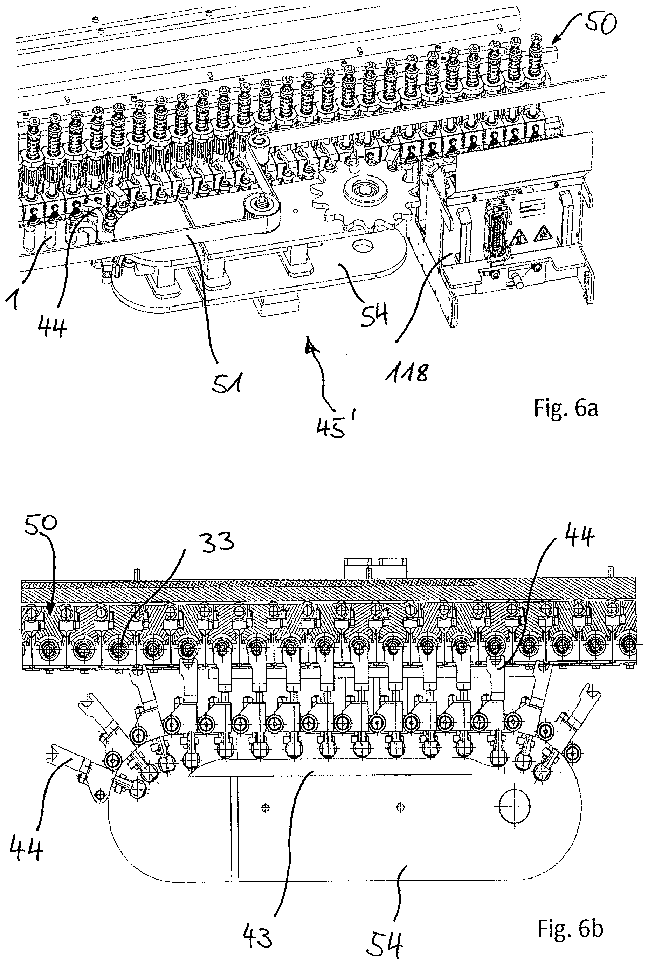

In nicht dargestellter Weise sind das obere Bauteil 53 und das untere Bauteil 54 der zweiten Eingriffseinrichtung 45' zu einer koordinierten Umlaufbewegung gekoppelt. Auch hier ist denkbar, beide Bauteile 53, 54 mit eigenen Antrieben zu versehen, die zueinander koordiniert arbeiten, um eine gleichförmige und synchronisierte Umlaufbewegung zu erreichen. Es ist aber auch denkbar, dass nur eine der beiden Baueinheiten 53, 54 über einen Antrieb verfügt und zum Beispiel die andere Baueinheit über eine Bewegungskopplung mit angetrieben wird. Es ist aber auch möglich, dass eine oder beide Baueinheiten in die Transportkette 50 eingreifen mittels Mitnehmern und von der Transportkette 50 mitgenommen werden. Beispielhaft gezeigt ist dies in den Figuren 6a und 6b. Diese Ausführungsvariante hat den Vorteil, dass automatisch die einzelnen Kettenglieder der Eingriffskette 45' mit gleicher Geschwindigkeit laufen wie die Transportkettenglieder. Bei Eingriff der Eingriffselemente 45' in das Zahnrad 52 des Transportdornes 33 und bei der gegebenen gleichen Geschwindigkeit der Eingriffseinrichtung 45' und des Transportdornes 33 führt dies dazu, dass eine Eigenrotation des Vorformlings 14 um seine Längsachse unterbunden ist. Entsprechend kann der Vorformling 14 mit einer festen Orientierung in Umfangsrichtung durch die für die Temperaturauszeichnung eines Umfangsbereiches ausgebildeten Heizkästen 36 geführt werden. Da der Dorndrehriemen 51 im Bereich der zweiten Eingriffseinrichtung 45' außer Eingriff mit den Transportdornen 33 geführt wird, ist es ausreichend, in diesem Bereich die Dorndrehung zu beenden und anzuhalten.

Grundsätzlich könnte z.B. vorgesehen sein, dass der Mitnehmer 44 ein Eingriffselement aufweist, z.B. eine Sperrglied, das in den Drehantriebskörper 52 des Transportdorns 33 eine Drehung verhindernd eingreift, sobald der Mitnehmer 44 z.B. kurvengesteuert in mitnehmenden Eingriff mit der Transportkette 50 gebracht wird. Die Sperrglieder würden dann mit den Mitnehmern bewegt und z.B. zeitgleich in Eingriff und außer Eingriff gebracht. Dazu müsste allerdings z.B. das in Fig. 6a gezeigte Abheben des Dorndrehriemens 51 früher als dort dargestellt erfolgen. Es ist auch möglich, dass getrennt vom Mitnehmer 44, aber in analoger Weise wie zum Mitnehmer 44 gezeigt, an jedem Kettenglied ein Eingriffselement der Eingriffseinrichtung 45' angeordnet ist, das z.B. ebenfalls kurvengesteuert in Eingriff und außer Eingriff mit dem Drehantriebskörper 52 des Transportdornes 33 gebracht wird. Dies kann dann zeitlich versetzt zum Mitnehmereingriff in die Förderkette 50 erfolgen. Dies würde auch möglich machen, die Zahl der Mitnehmer 44 anders als die Zahl der Eingriffselemente zu wählen. Es besteht keine Notwendigkeit, dass jedes Kettenglied einen Mitnehmer aufweist, dies ist rein optional. Es ist lediglich erforderlich, dass eine ausreichende Anzahl an Mitnehmern über die Kettenlänge verteilt angeordnet ist, um eine kontinuierliche Mitführung zu gewährleisten. Dazu wären aber 3 oder 4 gleichmäßig verteilte Mitnehmer ausreichend.

Die Fig. 6a und 6b zeigen unter Weglassung des oberen Bauteiles, wie die im vorstehenden Absatz angesprochenen Mitnehmer 44 in einer speziellen Ausführungsform ausgebildet sein könnten. Die untere Ketteneinheit 54 weist in radialer Richtung verschiebliche Mitnehmer 44 auf, die z.B. federgespannt in einer radial nach innen gezogenen Positionierung gehalten sind. Bei Erreichen einer externen Steuerkurve 43 werden die Mitnehmer 44 radial nach außen gedrückt und gelangen in Schleppeingriff mit den Transportmittel 33 der Transportkette. Eine solche Lösung wird als vorteilhaft betrachtet, da die Mitnehmer 44 nicht einfach in die linear bewegte Transportkette 50 einschwenken können. Der Eingriff der Mitnehmer 44 kann z.B. nur im linearen Umlaufbereich 42 erfolgen.

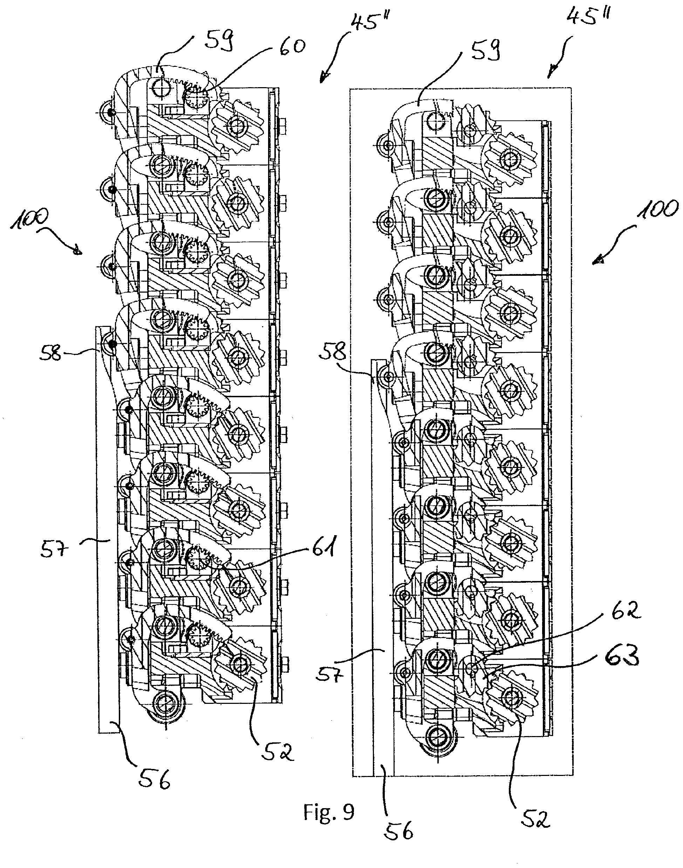

Fig. 8 zeigt eine weitere Konkretisierung einer zweiten Eingriffseinrichtung 45". Diese Eingriffseinrichtung 45" besteht aus mehreren Eingriffselementen 63, die durch eine externe Steuerkurve 56 kurvengesteuert ausgebildet sind. In einem ersten Bereich 57 dieser Steuerkurve 56 befinden sich die Eingriffselemente 63 außer Eingriff mit dem Zahnrad 52 des Transportdornes 33. In einem zweiten Bereich 58 der Steuerkurve 56 wird ein Schwenkhebel 59 betätigt, der über eine Innenverzahnung 60 verfügt und der ein Zahnritzel 61 antreibt. Details hierzu sind in den Figuren 9 besser zu erkennen. Insbesondere ist dort zu erkennen, dass dieses Ritzel 61 auf einer gemeinsamen Welle 62 mit einen Riemenscheibensegment 63 sitzt. Die Schwenkbewegung des Schwenkhebels 59 führt zu einer Drehung des Ritzels 61. Die Drehung des Ritzels 61 wird von dem Riemenscheibensegment 63 mitvollzogen. Im ersten Bereich 57 der Steuerkurve 56 befindet sich dieses Riemenscheibensegment 63 außer Eingriff mit dem Zahnrad 52 des Transportdornes 33. Im zweiten Bereich 58 der Steuerkurve 56 schwenkt der Schwenkhebel 59, dreht dadurch das Ritzel 61 und dadurch gelangt das Riemenscheibensegment 63 in Eingriff mit dem Zahnrad 52 des Transportdornes 33. Beibehaltung dieser Position führt dazu, dass das Zahnrad 52 festgehalten ist und der Transportdorn 33 und der davon gehaltene Vorformling 14 drehfest gehalten sind.

Diese Konstruktion erlaubt es weiterhin, den Transportdorn 33 und den davon gehaltenen Vorformling 14 nicht nur drehfest zu halten, sondern gezielt um einen bestimmten Drehwinkel zu verdrehen, nämlich dann, wenn die Schwenkbewegung des Schwenkhebels 59 so ausgeführt wird, dass das Riemenscheibensegment 63 nicht nur das Zahnrad 52 in einer bestimmten Position festhält, sondern der Schwenkhebel 59 könnte zum Beispiel in einem dritten Bereich der Steuerkurve 56 stärker verschwenkt werden, dadurch das Ritzel 61 noch weiter drehen und dadurch das Riemenscheibensegment 63 noch weiter drehen, sodass in Folge des kämmenden Eingriffs mit dem Zahnrad 52 des Transportdornes 33 dieses Zahnrad 52 und somit auch der Transportdorn 33 um einen bestimmten Winkel verdreht wird. Dies kann z.B. als Vorformlingsausrichteinrichtung verwendet werden, da der Vorformling 14 in einer bestimmten Ausrichtung in die Umformstation 16 eingesetzt werden soll und dazu ggf. gezielt gedreht werden muss.

Im Stand der Technik sind eine Vielzahl weiterer geeigneter Ausrichteinrichtungen für Vorformlinge bekannt, z.B. mit Ausrichtstrukturen am Vorformling oder mit optischen Markierungen am Vorformling zusammenwirkenden Einrichtungen. Die WO 2016/180510 A1 zeigt Beispiele und benennt Beispiele im Stand der Technik, die grundsätzlich als Vorformlingsausrichteinrichtungen auch für die vorliegende Erfindung geeignet sind, um den temperaturausgezeichneten Umfangsbereich des Vorformlings in der gewünschten Weise für die Übergabe in die Umformstationen auszurichten. Auf den Inhalt der WO 2016/180510 A1 und auf den Inhalt der darin als Stand es Technik genannten Dokumente wird diesbezüglich explizit Bezug genommen.

## Patentansprüche

1. Verfahren zur Herstellung von mit einem flüssigen Füllgut gefüllten Behältern (12) aus Vorformlingen (14) aus einem thermoplastischen Material, wobei der jeweilige Vorformling (14) entlang einer Heizstrecke in einer Heizvorrichtung (116) thermisch konditioniert und anschließend während einer Umform- und Füllphase in einer Form (13) einer Umformstation (16) mit wenigstens einem unter einem Druck in den Vorformling (14) zugeführten flüssigen Füllgut (3) als Druckmedium in den Behälter (12) umgeformt und gefüllt wird, wobei der Vorformling (14) während seiner Umformung in den Behälter (12) vorzugsweise mindestens zeitweilig durch eine Reckstange (11) geführt und in seiner Achsrichtung (X) gestreckt wird, wobei mehrere Umformstationen (16) auf einem gemeinsamen, kontinuierlich umlaufend angetriebenen Arbeitsrad (110) umfangsbeabstandet in einem radialen Abstand zu einer Umlaufachse (MA) des Arbeitsrades (110) angeordnet werden, **gekennzeichnet durch** eine Kompensationseinrichtung (36, 53, 100) zur Kompensation der thermischen Folgen der auf das in den Vorformling (14) eingefüllte Füllgut (3) wirkenden Zentrifugalkraft, wobei die Kompensationseinrichtung (36, 53, 100) als eine Temperiereinrichtung ausgeführt ist, die dem Vorformling (14) ein Temperaturprofil in Umfangsrichtung aufprägt, das nicht punktsymmetrisch zur Vorformlingslängsachse (X) ist und dadurch einen temperaturausgezeichneten Teilumfangsbereich (14a) im Vorformling (14) erzeugt, wobei der Vorformling (14) so ausgerichtet in die Form (13) eingesetzt wird, dass der temperaturausgezeichnete Teilumfangsbereich (14a) in radialer Richtung des Arbeitsrades (110) weist.

2. Verfahren nach Anspruch 1, **dadurch gekennzeichnet, dass** der temperaturausgezeichnete Teilumfangsbereich (14a) stärker erwärmt wird, als die übrigen Umfangsbereiche (14b, 14c, 14d) des Vorformlings (14).

3. Verfahren nach Anspruch 1 oder 2, **dadurch gekennzeichnet, dass** das in Umfangsrichtung dem Vorformling (14) aufgeprägte Temperaturprofil in Abhängigkeit von der Umlaufgeschwindigkeit des Arbeitsrades (110) gewählt, geregelt oder gesteuert wird.

4. Verfahren nach einem der Ansprüche 1 bis 3, **dadurch gekennzeichnet, dass** die Kompensationseinrichtung (36, 53, 100) in der Heizstrecke in der Heizvorrichtung (116) für die Vorformlinge (14) angeordnet wird.

5. Verfahren nach einem der Ansprüche 1 bis 4, **dadurch gekennzeichnet, dass** der temperaturausgezeichnete Teilumfangsbereich (14a) nach dem Einsetzen des Vorformlings (14) in die Form (13) einer Umformstation (16) radial nach außen weist.

6. Verfahren nach einem der vorhergehenden Ansprüche, **dadurch gekennzeichnet, dass** ein um seine Längsachse (X) rotationssymmetrischer Behälter (12) mit n-facher Rotationssymmetrie geformt wird, wobei n größer 4 ist, bevorzugt n größer 6, weiter bevorzugt n größer 8, wobei insbesondere ein im wesentlicher kreissymmetrischer Behälter (12) geformt wird.

7. Vorrichtung (10) zur Herstellung von mit einem flüssigen Füllgut (3) gefüllten Behältern (12) aus Vorformlingen (14) aus einem thermoplastischen Material, wobei die Vorrichtung mehrere Umformstationen (16) mit jeweils einem Form- und Füllkopf (8) und einer Form (13) aufweist, wobei die Umformstation (16) ausgeführt ist, einen entlang einer Heizstrecke in einer Heizvorrichtung (116) thermisch konditionierten Vorformling (12) während einer Umform- und Füllphase in der Form (13) mit einem unter einem Druck in den Vorformling (14) zugeführten flüssigen Füllgut (3) als Druckmedium in den Behälter (12) umzuformen und zu füllen, wobei die Umformung in den Behälter (12) bei geschlossener Form (13) gegen die Forminnenwand (7) erfolgt, wobei die Umformstation (16) bevorzugt eine Reckstange (11) aufweist und ausgeführt ist, den Vorformling (14) während seiner Umformung in den Behälter (12) und während seiner Füllung mindestens zeitweilig durch die Reckstange (11) zu führen und in Achsrichtung (X) zu recken, wobei mehrere Umformstationen (16) auf einem gemeinsamen, kontinuierlich umlaufend angetriebenen Arbeitsrad (110) umfangsbeabstandet in einem radialen Abstand zu einer Umlaufachse (MA) des Arbeitsrades (110) angeordnet sind, **dadurch gekennzeichnet, dass** die Vorrichtung eine Kompensationseinrichtung (36, 53, 100) zur Kompensation der thermischen Folgen der auf das in den Vorformling (14) eingefüllte Füllgut (3) wirkenden Zentrifugalkraft aufweist, wobei die Kompensationseinrichtung (36, 53, 100) als Temperiereinrichtung (36, 53) ausgebildet ist, die steuerungstechnisch ausgebildet und eingerichtet ist für die Erzeugung eines Temperaturprofiles im Vorformling (14), und wobei die Kompensationseinrichtung weiterhin eine Vorformlingsausrichteinrichtung (100) zum ausgerichteten Einsetzen des temperaturprofilierten Vorformlinges (14) in eine Form (13) einer Umformstation (16) aufweist, wobei die Temperiereinrichtung (36, 53) ausgebildet und eingerichtet ist, einem Vorformling (14) ein Temperaturprofil in Umfangsrichtung aufzuprägen, das nicht punktsymmetrisch zur Vorformlingslängsachse (X) ist und dadurch einen temperaturausgezeichneten Teilumfangsbereich (14a) im Vorformling (14) erzeugt, wobei die Vorformlingsausrichteinrichtung (100) ausgebildet und eingerichtet ist, den Vorformling (14) so ausgerichtet in die Form (13) einzusetzen, dass der temperaturausgezeichnete Teilumfangsbereich (14a) in radialer Richtung des Arbeitsrades (110) weist.

8. Vorrichtung (10) nach Anspruch 7, **dadurch gekennzeichnet, dass** die Temperiereinrichtung (36, 53) in der Heizstrecke in der Heizvorrichtung (116) für die Vorformlinge (14) angeordnet ist.

9. Vorrichtung nach Anspruch 7 oder 8, **dadurch gekennzeichnet, dass** die Temperiereinrichtung (36, 53) so ausgeführt ist, dass der temperaturausgezeichnete Teilumfangsbereich (14a) stärker erwärmt wird, als die übrigen Umfangsbereiche (14b, 14c, 14d) des Vorformlings (14).

10. Vorrichtung nach einem der Ansprüche 7 bis 9, **dadurch gekennzeichnet, dass** die Vorformlingsausrichteinrichtung (100) so ausgeführt ist, dass der temperaturausgezeichnete Teilumfangsbereich (14a) nach Einsetzen des Vorformlings (14) in die Form (13) einer Umformstation (16) radial nach außen weist.

11. Vorrichtung nach einem der vorhergehenden Ansprüche, **dadurch gekennzeichnet, dass** die Forminnenwand (7) für die Herstellung eines um seine Längsachse (X) rotationssymmetrischen Behälters (12) mit n-facher Rotationssymmetrie ausgeführt ist, wobei n größer 4 ist, bevorzugt n größer 6, weiter bevorzugt n größer 8, wobei die Forminnenwand (7) insbesondere für die Herstellung eines im wesentlichen kreissymmetrischen Behälters (12) ausgeführt ist.

12. Vorrichtung nach einem der vorhergehenden Ansprüche, **dadurch gekennzeichnet, dass** die Steuerung der Temperiereinrichtung (36, 53) zur von der Umlaufgeschwindigkeit des Arbeitsrades (110) abhängigen Steuerung oder Regelung der Temperaturprofilerzeugung ausgebildet ist.

13. Verfahren nach einem der vorhergehenden Ansprüche 1 bis 6 oder Vorrichtung nach einem der vorhergehenden Ansprüche 7 bis 12, **dadurch gekennzeichnet, dass** der temperaturausgezeichnete Teilumfangsbereich (14a) einen Teilumfangswinkel φ von kleiner 180°, bevorzugt kleiner 120°, weiter bevorzugt von kleiner 90° aufweist.

## Claims

1. A method for producing containers (12) from preforms (14) of a thermoplastic material filled with a liquid filling material, wherein the respective preform (14) is thermally conditioned along a heating section in a heating device (116) and subsequently, during a forming and filling phase in a mould (13) of a forming station (16), is formed into the container (12) and filled with at least one liquid filling material (3) fed under a pressure into the preform (14) as pressure medium, wherein the preform (14) is preferably guided at least for a time by a stretching rod (11) during its formation into the container (12) and is stretched in the axial direction (X) thereof, wherein several forming stations (16) are arranged circumferentially spaced apart on a common, continuously circumferentially driven working wheel (110) at a radial distance from an axis of rotation (MA) of the working wheel (110), **characterised by** a compensating device (36, 53, 100) for compensation of the thermal consequences of the centrifugal force acting on the filling material (3) filled into the preform (14), wherein the compensating device (36, 53, 100) is designed as a temperature control device, which imparts a temperature profile to the preform (14) in the circumferential direction, which temperature profile is not point-symmetrical in relation to the longitudinal axis (X) of the preform and thus creates a temperature-differentiated partial circumferential region (14a) in the preform (14), wherein the preform (14) is inserted into the mould (13) so as to be aligned such that the temperature-differentiated partial circumferential region (14a) points in the radial direction of the working wheel (110).

2. The method according to Claim 1, **characterised in that** the temperature-differentiated partial circumferential region (14a) is heated more strongly than the remaining circumferential regions (14b, 14c, 14d) of the preform (14).

3. The method according to Claim 1 or 2, **characterised in that** the temperature profile imparted to the preform (14) in the circumferential direction is selected, regulated or controlled as a function of the rotational speed of the working wheel (110).

4. The method according to anyone of Claims 1 to 3, **characterised in that** the compensating device (36, 53, 100) is arranged in the heating section in the heating device (116) for the preforms (14).

5. The method according to anyone of Claims 1 to 4, **characterised in that** the temperature-differentiated partial circumferential region (14a) points radially to the outside after the insertion of the preform (14) into the mould (13) of a forming station (16).

6. The method according to anyone of the preceding claims, **characterised in that** a container (12), which is rotationally symmetrical around its longitudinal axis (X), is moulded with n-fold rotational symmetry, wherein n is greater than 4, preferably n is greater than 6, more preferably n is greater than 8, wherein in particular an essentially circular symmetrical container (12) is moulded.

7. A device (10) for producing containers (12) from preforms (14) of a thermoplastic material filled with a liquid filling material (3), wherein the device has several forming stations (16), each comprising a moulding and filling head (8) and a mould (13), wherein the forming station (16) is designed to form and to fill a preform (12), which is thermally conditioned along a heating section in a heating device (116) into the container (12), during a forming and filling phase in the mould (13), with a liquid filling material (3) fed under a pressure into the preform (14) as pressure medium, wherein the formation into the container (12) takes place when the mould (13) is closed against the mould inner wall (7), wherein the forming station (16) preferably has a stretching rod (11) and is designed to guide the preform (14) during the formation thereof into the container (12) and during the filling thereof at least for a time by the stretching rod (11) and to stretch it in the axial direction (X), wherein several forming stations (16) are arranged circumferentially spaced apart on a common, continuously circumferentially driven working wheel (110) at a radial distance from an axis of rotation (MA) of the working wheel (110), **characterised in that** the device has a compensating device (36, 53, 100) for compensation of the thermal consequences of the centrifugal force acting on the filling material (3) filled into the preform (14), wherein the compensating device (36, 53, 100) is designed as a temperature control device (36, 53), which, in terms of control, is designed and set up for the creation of a temperature profile in the preform (14), and wherein the compensating device furthermore has a preform aligning device (100) for inserting the temperature-profiled preform (14) into a mould (13) of a forming station (16) so as to be aligned, wherein the temperature control device (36, 53) is designed and set up to impart a temperature profile to a preform (14) in the circumferential direction, which temperature profile is not point-symmetrical in relation to the longitudinal axis (X) of the preform and thus creates a temperature-differentiated partial circumferential region (14a) in the preform (14), wherein the preform aligning device (100) is designed and set up to insert the preform (14) into the mould (13) so as to be aligned such that the temperature-differentiated partial circumferential region (14a) points in the radial direction of the working wheel (110).

8. The device (10) according to Claim 7, **characterised in that** the temperature control device (36, 53) is arranged in the heating section in the heating device (116) for the preforms (14).

9. The device according to Claim 7 or 8, **characterised in that** the temperature control device (36, 53) is designed such that the temperature-differentiated partial circumferential region (14a) is heated more strongly than the remaining circumferential regions (14b, 14c, 14d) of the preform (14).

10. The device according to anyone of Claims 7 to 9, **characterised in that** the preform aligning device (100) is designed such that the temperature-differentiated partial circumferential region (14a) points radially to the outside after insertion of the preform (14) into the mould (13) of a deforming station (16).

11. The device according to anyone of the preceding claims, **characterised in that** the mould inner wall (7) for the production of a container (12), which is rotationally symmetrical around its longitudinal axis (X), is designed with n-fold rotational symmetry, wherein n is greater than 4, preferably n is greater than 6, more preferably n is greater than 8, wherein the mould inner wall (7) is designed in particular for the production of an essentially circular cylindrical container (12).

12. The device according to anyone of the preceding claims, **characterised in that** the control of the temperature control device (36, 53) is designed for the control or regulation of the temperature profile generation, which is a function of the rotational speed of the working wheel (110).

13. A method according to anyone of the preceding Claims 1 to 6 or a device according to anyone of the preceding Claims 7 to 12, **characterised in that** the temperature-differentiated partial circumferential region (14a) has a partial circumferential angle φ of smaller than 180°, preferably smaller than 120°, more preferably of smaller than 90°.

## Revendications

1. Procédé de fabrication, à partir de préformes (14) en un matériau thermoplastique, de récipients (12) remplis d'un produit de remplissage liquide, chaque préforme (14) étant respectivement thermiquement conditionnée le long d'une section de chauffage dans un dispositif de chauffage (116), après quoi elle est transformée en un récipient (12) et remplie, au cours d'une phase de moulage et de remplissage dans un moule (13) d'une station de formage (16), avec au moins un produit de remplissage liquide (3) faisant fonction d'agent de pression introduit sous pression dans la préforme (14), la préforme (14) étant, pendant sa transformation en récipient (12), de préférence guidée, temporairement au moins, par une barre d'étirage (11) et étirée en son sens axial (X), plusieurs stations de formage (16) étant agencées sur une roue de travail (110) commune entraînée en rotation continue sur laquelle ces stations sont disposées avec un certain espacement périphérique et à une distance radiale d'un axe de rotation (MA) de la roue de travail (110), **caractérisé par** un dispositif de compensation (36, 53, 100) pour la compensation des conséquences thermiques de la force centrifuge agissant sur le produit de remplissage (3) introduit dans la préforme (14), le dispositif de compensation (36, 53, 100) étant réalisé sous forme de dispositif de conditionnement thermique qui imprime à la préforme (14) en sens périphérique un profil de températures sans symétrie ponctuelle par rapport à l'axe longitudinal (X) de la préforme et génère de ce fait dans la préforme (14) une zone périphérique partielle (14a) présentant une température caractéristique, la préforme (14) étant placée dans le moule (13) avec une orientation telle que la zone périphérique partielle (14a) présentant une température caractéristique est orientée dans la direction radiale de la roue de travail (110).

2. Procédé selon la revendication 1, **caractérisé en ce que** la zone périphérique partielle (14a) présentant une température caractéristique est réchauffée plus fortement que les autres zones périphériques (14b, 14c, 14d) de la préforme (14).

3. Procédé selon la revendication 1 ou 2, **caractérisé en ce que** le profil de températures imprimé à la préforme (14) en sens périphérique est choisi, réglé ou commandé en fonction de la vitesse de rotation de la roue de travail (110).

4. Procédé selon l'une des revendications 1 à 3, **caractérisé en ce que** le dispositif de compensation (36, 53, 100) est agencé dans la section de chauffage du dispositif de chauffage (116) des préformes (14).

5. Procédé selon l'une des revendications 1 à 4, **caractérisé en ce qu'**après l'introduction de la préforme (14) dans le moule (13) d'une station de formage (16), la zone périphérique partielle (14a) présentant une température caractéristique est orientée radialement vers l'extérieur.

6. Procédé selon l'une des revendications précédentes, **caractérisé en ce qu'un** récipient (12) à symétrie de rotation autour de son axe longitudinal (X) est formé avec une symétrie de rotation d'ordre n, avec n supérieur à 4 et de préférence n supérieur à 6 ou de préférence n supérieur à 8, le récipient (12) formé étant notamment de symétrie essentiellement circulaire.

7. Dispositif (10) de fabrication, à partir de préformes (14) en un matériau thermoplastique, de récipients (12) remplis d'un produit de remplissage liquide (3), le dispositif présentant plusieurs stations de formage (16) respectivement dotées d'une tête de moulage et de remplissage (8) et d'un moule (13), la station de formage (16) étant conçue pour qu'une préforme (14) thermiquement conditionnée le long d'une section de chauffage dans un dispositif de chauffage (116) soit, au cours d'une phase de moulage et de remplissage dans le moule (13), transformée en un récipient (12) et remplie avec un produit de remplissage liquide (3) faisant fonction d'agent de pression introduit sous pression dans la préforme (14), la transformation en récipient (12) ayant lieu contre la paroi intérieure (7) du moule (13) fermé, la station de formage (16) présentant de préférence une barre d'étirage (11) et étant conçue pour, temporairement au moins, guider et étirer en sens axial (X) la préforme (14) avec la barre d'étirage (11) pendant sa transformation en récipient (12) et son remplissage, plusieurs stations de formage (16) étant agencées sur une roue de travail (110) commune entraînée en rotation continue sur laquelle ces stations sont disposées avec un certain espacement périphérique et à une distance radiale d'un axe de rotation (MA) de la roue de travail (110), **caractérisé en ce que** le dispositif présente un dispositif de compensation (36, 53, 100) pour la compensation des conséquences thermiques de la force centrifuge agissant sur le produit de remplissage (3) introduit dans la préforme (14), le dispositif de compensation (36, 53, 100) étant réalisé sous forme d'un dispositif de conditionnement thermique (36, 53) dont la technique de commande est conçue et aménagée pour générer un profil de températures dans la préforme (14), le dispositif de compensation présentant en outre un dispositif de positionnement de préforme (100) pour introduire avec une orientation définie la préforme (14) dotée d'un profil de températures dans un moule (13) d'une station de formage (16), le dispositif de conditionnement thermique (36, 53) étant conçu et aménagé pour imprimer à la préforme (14) en sens périphérique un profil de températures qui ne présente pas de symétrie ponctuelle par rapport à l'axe longitudinal (X) de la préforme et, de ce fait, génère dans la préforme (14) une zone périphérique partielle (14a) présentant une température caractéristique, le dispositif de positionnement de préforme (100) étant conçu et aménagé pour placer la préforme (14) dans le moule (13) avec une orientation telle que la zone périphérique partielle (14a) présentant une température caractéristique est orientée dans la direction radiale de la roue de travail (110).

8. Dispositif (10) selon la revendication 7, **caractérisé en ce que** le dispositif de conditionnement thermique (36, 53) est agencé dans la section de chauffage du dispositif de chauffage (116) des préformes (14).

9. Dispositif selon la revendication 7 ou 8, **caractérisé en ce que** le dispositif de conditionnement thermique (36, 53) est réalisé de façon à ce que la zone périphérique partielle (14a) présentant une température caractéristique est réchauffée plus fortement que les autres zones périphériques (14b, 14c, 14d) de la préforme (14).

10. Dispositif selon l'une des revendications 7 à 9, **caractérisé en ce que** le dispositif de positionnement de préforme (100) est réalisé de façon à ce qu'après l'introduction de la préforme (14) dans le moule (13) d'une station de formage (16), la zone périphérique partielle (14a) présentant une température caractéristique est orientée radialement vers l'extérieur.

11. Dispositif selon l'une des revendications précédentes, **caractérisé en ce que** la paroi intérieure (7) du moule est conçue pour la production d'un récipient (12) à symétrie de rotation d'ordre n autour de son axe longitudinal (X), n étant supérieur à 4 et de préférence supérieur à 6 ou de préférence supérieur à 8 et la paroi intérieure (7) du moule étant notamment conçue pour la production d'un récipient (12) de symétrie essentiellement circulaire.

12. Dispositif selon l'une des revendications précédentes, **caractérisé en ce que** la commande du dispositif de conditionnement thermique (36, 53) est conçu pour commander ou régler la production d'un profil de températures en fonction de la vitesse de rotation de la roue de travail (110).

13. Procédé selon l'une des revendications précédentes 1 à 6 ou dispositif selon l'une des revendications précédentes 7 à 12, **caractérisé en ce que** la zone périphérique partielle (14a) présentant une température caractéristique s'étend sur un angle circonférentiel Φ inférieur à 180°, de préférence inférieur à 120° ou de préférence inférieur à 90°.
